# EUROPÄISCHE PATENTSCHRIFT

(11) **EP 2 806 102 B1**
(45) Veröffentlichungstag und Bekanntmachung des Hinweises auf die Patenterteilung: **11.12.2019**
(21) Anmeldenummer: 13169056.2
(22) Anmeldetag: 24.05.2013
(51) Int. Cl.: F01D 5/14, F01D 9/04

(54) **Schaufelgitter einer Strömungsmaschine und zugehörige Strömungsmaschine**
Bladed stator stage of a turbomachine and corresponding turbomachine
Aubage statorique de turbomachine et turbomachine associée

(43) Veröffentlichungstag der Anmeldung: 26.11.2014
(73) Patentinhaber: MTU Aero Engines AG, 80995 München (DE)
(72) Erfinder: Gündogdu, Yavuz, 80809 München (DE); Gier, Jochen, 85757 Karlsfeld (DE); Engel, Karl, 85221 Dachau (DE)

(56) Entgegenhaltungen:
- EP-A1- 2 088 286
- EP-A1- 2 261 462
- EP-A2- 2 194 232
- WO-A1-98/44240
- WO-A1-2013/009449
- US-A1- 2011 044 818

## Beschreibung

Die Erfindung betrifft ein Schaufelgitter einer Strömungsmaschine nach dem Oberbegriff des Patentanspruchs 1 und eine Strömungsmaschine mit einem derartigen Schaufelgitter.

Eine durch einen Strömungskanal geführte Primär- bzw. Hauptströmung wird durch einen seitlichen Druckgradienten parallel zur Begrenzungswand abgelenkt. Da wandnahe Strömungsschichten aufgrund ihrer geringeren Geschwindigkeit stärker als wandferne Strömungsschichten abgelenkt werden, wird eine Sekundärströmung bzw. ein Kanalwirbel gebildet, die der Hauptströmung überlagert ist, was unter anderem zu Druckverlusten führt. Derartige Sekundärströmungen treten regelmäßig in Schaufelgittern von Strömungsmaschinen wie Gas- und Dampfturbinen auf. Die Schaufelgitter bestehen aus einer Vielzahl von in Umfangsrichtung nebeneinander angeordneten Schaufeln bzw. Schaufelblättern, die in einem rotationssymmetrischen Strömungskanal angeordnet sind und zwischen denen jeweils ein Schaufelkanal ausgebildet ist. Die Schaufelkanäle sind in Radialrichtung jeweils von einer radial äußeren gehäuseseitigen Seitenwandung und von einer radial inneren narbenseitigen Seitenwandung begrenzt. Die Seitenwandungen sind beispielsweise feststehende Gehäuseabschnitt, Rotorabschnitte, radial innere Schaufelplattformen und/oder radial äußere Schaufeldeckplatten. In Umfangsrichtung werden die Schaufelkanäle jeweils von einer druckseitigen und einer saugseitigen Schaufelblattwandung begrenzt. Zur Verringerung der Sekundärströmungen werden in die Seitenwandungen häufig Konturierungen in Form von Erhebungen und/oder Senken eingebracht. Beispiele für derartige, insbesondere nicht-umfangssymmetrische Seitenwandkonturierungen, sind in der europäischen Patentanmeldung EP 2 261 462 A1 und in der internationalen Patentanmeldung WO 98/44240 A1 gezeigt. Weiterhin offenbaren die EP2261462, WO2013/009449 und die US2011/0044818 Schaufelgitter nach dem Oberbegriff von Anspruch 1.

Aufgabe der Erfindung ist es, ein Schaufelgitter einer Strömungsmaschine mit einer reduzierten Sekundärströmung, sowie eine Strömungsmaschine mit einem verbesserten Wirkungsgrad zu schaffen.

Diese Aufgabe wird gelöst durch ein Schaufelgitter einer Strömungsmaschine mit den Merkmalen des Patentanspruchs 1 und durch eine Strömungsmaschine mit den Merkmalen des Patentanspruchs 11.

Ein erfindungsgemäßes Schaufelgitter einer Strömungsmaschine hat eine Vielzahl von Schaufelkanälen, die in Umfangsrichtung jeweils von einer Druckseite eines Schaufelblattes und von einer gegenüberliegenden Saugseite eines benachbarten Schaufelblattes begrenzt sind. In Radialrichtung sind die Schaufelkanäle jeweils von zwei gegenüberliegenden Seitenwandungen begrenzt. Zumindest jeweils eine Seitenwandung der Schaufelkanäle ist mit einer Seitenwandkonturierung versehen. Erfindungsgemäß ist die Seitenwandkonturierung in Umfangsrichtung wellenartig und weist zumindest eine Erhebung, zumindest eine Senke und zumindest eine Rippe auf, die ein Schaufelblattprofil mit einer Druckseite und mit einer entgegengesetzten Saugseite hat.

Die erfindungsgemäße nicht-umfangssymmetrische Seitenwandkonturierung bewirkt eine Reduzierung von Sekundärströmungswirbeln und eine Verringerung von Abweichungen eines Abströmwinkels aus dem Schaufelgitter im seitenwandnahen Bereich. Die zumindest eine Seitenwandkonturierung erlaubt primäre Druckgradienten, insbesondere die in Umfangsrichtung wirkenden Druckgradienten, gezielt durch die zumindest eine schaufelprofilartige Rippe günstig zu beeinflussen. Zudem erlaubt die zumindest eine Seitenwandkonturierung den Abströmwinkel durch das Formen von zumindest einer in Primärströmungsrichtung bzw. Hauptstromrichtung verlaufenden Erhebung und zumindest einer in Primärströmungsrichtung verlaufenden Senke im jeweils beispielsweise hinteren Bereich der Seitenwandung in der Nähe der Seitenwandung derart zu beeinflussen und einzustellen, dass ein Folgegitter eine günstigere Zuströmverteilung erfährt und dadurch dort geringere Strömungsverluste verursacht werden. Zusätzlich wird erreicht, dass eine Interaktion von an der Schaufelvorderkante induzierten Hufeisenwirbeln miteinander und mit einem Kanalwirbel verhindert oder zumindest reduziert wird.

Die zumindest eine Erhebung und die zumindest eine Senke beziehen sich jeweils auf einem nicht-konturierten Flächenabschnitt der radial inneren Seitenwandung oder radial äußeren Seitenwandung. Bezogen auf die innere Seitenwandung erstreckt die zumindest eine Erhebung vom nicht-konturierten Flächenabschnitt radial nach außen und stellt somit eine Kanaleinschnürung dar. Die zumindest eine Senke erstreckt sich vom nicht-konturierten Flächenabschnitt radial nach innen und stellen somit eine Kanalerweiterung dar. Die zumindest eine Rippe kann sich anlog zu einer Erhebung über den nicht-konturierten Flächenabschnitt hinaus erstrecken. Zudem kann sich die zumindest eine Rippe radial nach außen von einer Erhebung erstrecken und somit auf eine Erhebung "draufgesetzt sein". Die zumindest eine Rippe kann sich jedoch auch aus einer Senke radial nach außen über einen nicht-konturierten Flächenabschnitt erstrecken und somit teilweise in der Senke angeordnet sein. Die zumindest eine Rippe kann sich jedoch auch aus einer Senke radial nach außen erstrecken, jedoch nicht über den nicht-konturierten Flächenabschnitt geführt sein und somit vollständig in der Senke angeordnet sein. Wenn die äußere Seitenwandung mit einer nicht-symmetrischen Seitenwandkonturierung versehen ist, erstrecken sich die zumindest eine Erhebung und die zumindest eine Rippe grundsätzlich radial nach innen und die zumindest eine Senke grundsätzlich radial nach außen.

Bevorzugterweise ist die Seitenwandkonturierung bis zum stromabwärtigen Seitenwandrand und somit bis zum hinteren Axialspalt geführt. Hierdurch wird ebenfalls der stromabwärtige Seitenwandrand wellenartig ausgeführt. Dabei können die zumindest eine Erhebungen, die zumindest eine Senke und/oder die zumindest eine Rippe einzeln bis zum stromabwärtigen Seitenwandrand geführt sein. Beginnen können die zumindest eine Erhebung, die zumindest eine Senke und/oder die zumindest eine Rippe am stromaufwärtigen Seitenwandrand, so dass ebenfalls ein stromaufwärtiger Seitenwandrand wellenartig ausgeführt sein kann. Grundsätzlich kann sich die Seitenwandkonturierung über Vorderkanten und Hinterkanten der Schaufelblätter hinaus erstrecken.

Die zumindest eine Erhebung und/oder die zumindest eine Senke kann/können zur Strömungsbeeinflussung in Strömungsrichtung variierende Amplituden haben. Hierdurch hat bzw. haben die zumindest eine Erhebung und/oder die zumindest eine Senke in Strömungsrichtung unterschiedliche Höhen bzw. Tiefen. Bevorzugterweise beträgt die zumindest eine Erhebung eine Höhe, die maximal 30% der Schaufelteilung entspricht.

Bevorzugterweise sind die Druckseite und die Saugseite der zumindest einen Rippe radial ausgerichtet, wobei "radial ebenfalls "im Wesentlichen radial" umfasst. "Radial" bedeutet insbesondere "steilwandig" mit einer Abweichung von der Radialrichtung um bis zu +- 15°. Bevorzugterweise hat die zumindest eine Rippe eine Höhe, die maximal 30% der Schaufelteilung entspricht.

Zur Abströmwinkelkontrolle ist es vorteilhaft, wenn sich die zumindest eine Rippe in einem Bereich von 40% bis 100% einer Axialschaufelbreite befindet.

Zur günstigen Beeinflussung der Hufeisenwirbel ist es vorteilhaft, wenn die zumindest eine Rippe in einem Bereich von 0% bis 60% der axialen Schaufelbreite ausgebildet ist.

Bevorzugterweise hat die Seitenwandkonturierung abgerundete Kanten. Durch das Abrunden bzw. Verrunden der Kanten wird die Bildung von Wirbeln, die Mischungsverluste induzieren können, verhindert bzw. zumindest stark reduziert. Beispielsweise hat die zumindest eine Rippe eine plane Rippendecke, deren Seitenkanten bzw. deren umlaufende Seitenkante abgerundet sind/ist. Alternativ kann die zumindest eine Rippe eine abgerundete oder spährisch geformte Rippendecke haben.

Die zumindest eine Rippe kann in Strömungsrichtung der Strömungsmaschine vorne und hinten stufenlos und somit glatt in angrenzende Flächenabschnitte übergehend.ausgebildet sein. Hierdurch wird ein sanfter Übergang zwischen der Rippe und einem nicht-konturierten Seitenwandungsabschnitt bzw. einem Abschnitt einer umfangssymmetrischen Seitenwandkontur geschaffen.

Zur Strömungsbeeinflussung kann es weiterhin vorteilhaft sein, wenn Krümmungsradien der Seitenwandkonturierung variieren.

Eine erfindungsgemäße Strömungsmaschine hat zumindest ein erfindungsgemäßes Schaufelgitter. Aufgrund von reduzierten Sekundärströmungen und einer gleichzeitig stärkeren Ausrichtung des jeweiligen Abströmwinkels der Primärströmung in eine Sollrichtung, ohne dass scharfe Kanten zusätzliche Wirbel und damit Mischungsverluste induzieren, zeichnet sich eine derartige Strömungsmaschine durch einen verbesserten Wirkungsgrad aus.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Fig. 1: einen abgewickelten Umfangsabschnitt eines ersten Ausführungsbeispiels eines erfindungsgemäßen Schaufelgitters,
- Fig. 2: einen Schnitt entlang der Linie A-A in Figur 1,
- Fig. 3: eine Detaildarstellung aus Figur 2,
- Fig. 4: einen abgewickelten Umfangsabschnitt eines zweiten Ausführungsbeispiels des erfindungsgemäßen Schaufelgitters,
- Fig. 5: einen abgewickelten Umfangsabschnitt eines dritten Ausführungsbeispiels des erfindungsgemäßen Schaufelgitters,
- Fig. 6: einen abgewickelten Umfangsabschnitt eines vierten Ausführungsbeispiels des erfindungsgemäßen Schaufelgitters, und
- Fig. 7: einen Schnitt entlang der Linie B-B in Figur 6.

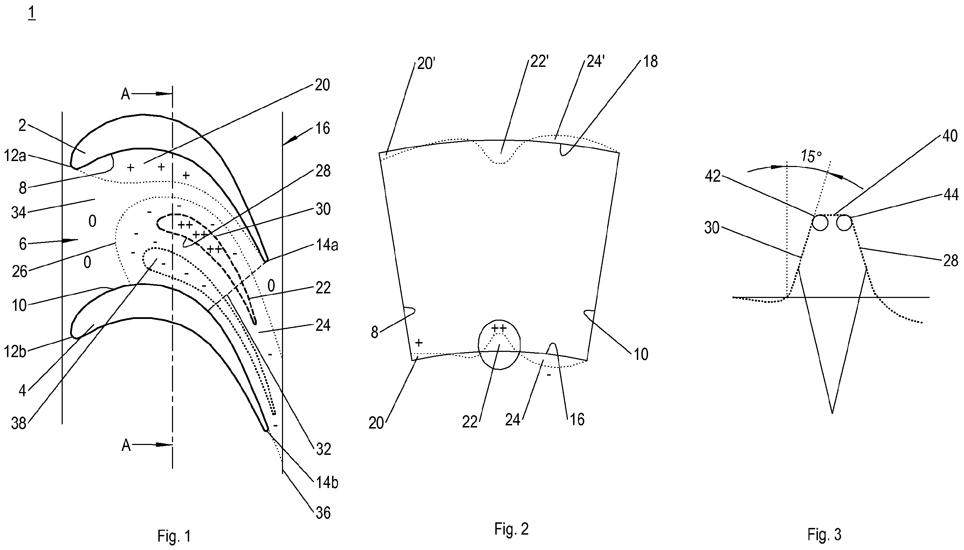

Figur 1 zeigt eine Draufsicht auf eine Schnittdarstellung eines in einer Ebene abgewickelten Umfangsabschnittes einer ersten erfindungsgemäßen Schaufelgitters 1 einer axialen Strömungsmaschine wie eine stationäre Gasturbine oder ein Flugzeugtriebwerk.

Das Schaufelgitter 1 ist bevorzugterweise turbinenseitig angeordnet und hat eine Vielzahl von Schaufelblättern 2, 4, die in Umfangsrichtung der Strömungsmaschine nebeneinander angeordnet sind und jeweils einen Schaufelkanal 6 begrenzen, der gemäß der Darstellung in Figur 1 von links nach rechts von einer Hauptströmung durchströmt wird. In Umfangsrichtung der Strömungsmaschine bzw. des Schaufelgitters 1 wird der Schaufelkanal 6 von einer druckseitigen Wandung bzw. Druckseite 8 des ersten Schaufelblattes 2 und von einer gegenüberliegenden saugseitigen Wandung bzw. Saugseite 10 des zweiten Schaufelblattes 4 begrenzt, die sich jeweils zwischen einer Vorderkante 12a, 12b und einer Hinterkante 14a, 14b der Schaufelblätter 2,4 erstrecken. Wie in Figur 2 zu erkennen, wird der Schaufelkanal 6 in Radialrichtung des Schaufelgitters 1 von einer nabenseitigen bzw. radial inneren Seitenwandung 16 begrenzt. Zudem wird der Schaufelkanal 6 in Radialrichtung von einer gehäuseseitigen bzw. radial äußeren Seitenwandung 18 begrenzt. Die innere Seitenwandung 16 wird beispielsweise von einem Rotorabschnitt oder einer Schaufelplattform gebildet. Die äußere Seitenwandung 18 wird bspw. von einem Gehäuseabschnitt oder einem Schaufeldeckband gebildet.

Erfindungsgemäß ist zumindest eine der Seitenwandungen 16, 18 im Bereich des Schaufelkanals 6 mit einer nicht-umfangssymmetrischen und in Umfangsrichtung wellenartigen Seitenwandkonturierung versehen. In dem in den Figuren 1 und 2 gezeigten Ausführungsbeispiel hat die durch die gestrichelte Linie angedeutete Seitenwandkonturierung drei Einzelkonturierungen 20, 22, 24 in Form einer druckseitigen Erhebung 20, einer Rippe 22 und einer Senke 24. Die Einzelkonturierungen 20, 22, 24 sind zeichnerisch durch eine Vielzahl von Höhen- bzw. Tiefenlinien 26 mit einem Pluszeichen oder mit einem Minuszeichen dargestellt.

Die Erhebung 20 und die Senke 24 beziehen sich jeweils auf einem nicht-konturierten Flächenabschnitt 34 der in diesem Ausführungsbeispiel inneren Seitenwandung 16. Die Erhebung 20 erstreckt sich vom nicht-konturierten Flächenabschnitt 34 radial nach außen und stellt somit eine Kanaleinschnürung dar. Die Senken 24 erstrecken sich vom nicht-konturierten Flächenabschnitt 34 radial nach innen und stellen somit eine Kanalerweiterung dar. Die Rippe 22 erstreckt sich bezogen auf die innere Seitenwandkonturierung grundsätzlich radial nach außen.

Wie in Figur 2 durch die gestrichelte Linie im Bereich der äußeren Seitenwandkonturierung angedeutet, kann die äußere Seitenwandung 18 ebenfalls mit einer nicht-umfangssymmetrischen und in Umfangsrichtung betrachtet wellenartigen Seitenwandkonturierung versehen sein, die aus einer Vielzahl von Einzelkonturierungen 20', 22', 24' besteht. Die inneren und äußeren Seitenwandkonturierungen können gleich oder unterschiedlich ausgebildet sein. Zudem kann lediglich die äußere Seitenwandung 18 mit einer nicht-umfangsymmetrischen Seitenwandkonturierung versehen sein. Wenn wie in Figur 2 angedeutet, die äußere Seitenwand 18 mit einer nicht-symmetrischen Seitenwandkonturierung versehen ist, erstrecken sich die Erhebungen 20' und die Rippen 22' grundsätzlich radial nach innen und die Senken 24' grundsätzlich radial nach außen. Unabhängig davon, stellen bei einer äußeren Seitenwandkonturierung die Erhebung 20' eine Kanaleinschnürung und die Senke 24' eine Kanalerweiterung dar.

Im Folgenden wird die Erfindung anhand von Seitenwandkonturierungen einer jeweils inneren Seitenwandung 16 erläutert.

Wie in Figur 1 gezeigt, erstreckt sich die druckseitige Erhebung 20 ausgehend vom nicht-konturierten Flächenabschnitt 34 entlang der druckseitigen Schaufelblattwandung 8 von der Vorderkante 12a bis zur Hinterkante 14a.

Die Rippe 22 hat ein Schaufelblattprofil mit einer Druckseite 28 und einer entgegengesetzten Saugseite 30. Sie ist etwa mittig zwischen den Schaufelblättern 2,4 angeordnet und erstreckt sich aus der Senke 24 über den nicht-konturierten Flächenabschnitt 34 hinaus. Sie ist derart zu den Schaufelblätter 2, 4 orientiert, dass die Druckseite 28 der druckseitigen Schaufelblattwandung 8 und die Saugseite 30 der saugseitigen Schaufelblattwandung 10 gegenüberliegt. Sie erstreckt sich in einem Bereich von 40% bis 100% einer axialen Schaufelbreite bzw. Schaufelblattbreite. Somit erstreckt sie sich in etwa von einem mittleren Seitenwandungsbereich über eine Engstelle 32 zwischen den Schaufelblättern 2,4 hinaus bis auf zumindest eine ungefähre axiale Position der Hinterkanten 14a, 14b.

Die Senke 24 ist von der druckseitigen Erhebung 20 über den nicht-konturierten Flächenabschnitt 34 der Seitenwandung 16 beabstandet und erstreckt sich in Umfangsrichtung bis zur saugseitigen Schaufelblattwandung 10. Die Senke 24 verläuft in etwa von einem Bereich, der 30% der axialen Schaufelbreite entspricht, bis zum hinteren Seitenwandrand 36 der Seitenwandung 16.

Die Senke 24 hat einen tiefsten Abschnitt 38, der zwischen der Rippe 22 und dem Schaufelblatt 4 angeordnet ist. Er erstreckt sich entsprechend der Rippe 22 in einem Bereich von 40% bis 100% der axialen Schaufelbreite. Er hat eine gebogene tropfenartige Grundfläche mit einem stromabwärtigen bzw. hinteren Bereich, der gegenüber einem stromaufwärtigen bzw. vorderen Bereich verjüngt ist.

Wie in Figur 2 gezeigt, ist die druckseitige Erhebung 20 mit einer kleineren Amplitude in Umfangsrichtung als die Rippe 22 ausgebildet. Sie geht in etwa orthogonal, d.h. in einem Winkel von 90° zur Radialrichtung, in die druckseitige Schaufelblattwandung 8 über.

Wie in Figur 3 gezeigt, sind die Druckseite 28 und die Saugseite 30 der schaufelprofilartigen Rippe 22 steilwandig. "Steilwandig" bedeutet eine Abweichung in Radialrichtung von bevorzugterweise maximal +/- 15° zueinander. Sie sind über eine plane Rippendecke 40 miteinander verbunden, die über abgerundete Seitenkanten 42, 44 mit gleichem Krümmungsradius in die Seiten bzw. Flanken 28, 30 der Rippe 22 übergehen. Bevorzugterweise hat die zumindest eine Rippe 22 eine maximale Umfangsbreite von maximal 25% einer Schaufelteilung.

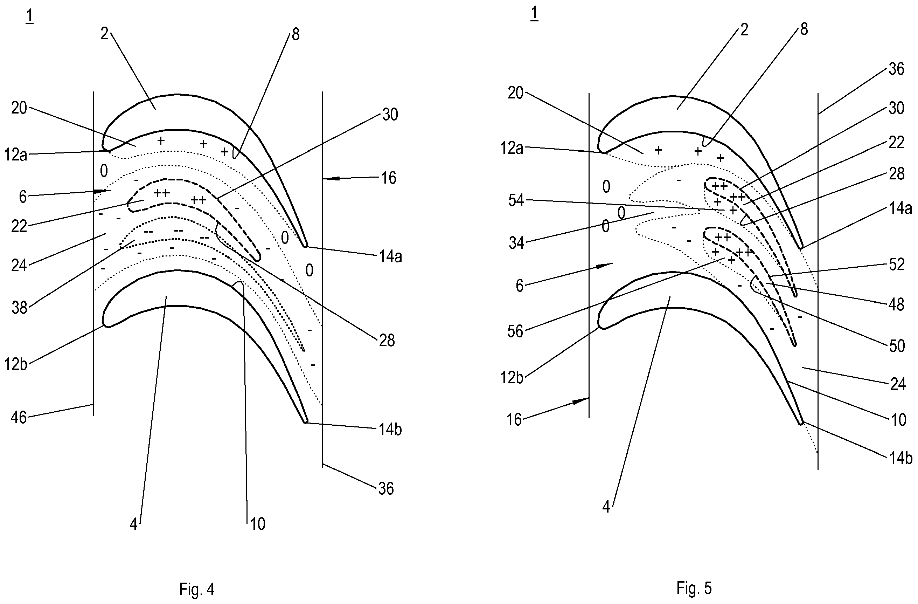

In Figur 4 ist ein weiteres Ausführungsbeispiel einer in Umfangsrichtung wellenartigen Seitewandkonturierung einer inneren Seitenwandung 16 in einem Schaufelkanal 6 zwischen zwei Schaufelblättern 2, 4 gezeigt. Die Seitenwandkonturierung hat ebenfalls eine druckseitige Erhebung 20, eine mittige und schaufelblattprofilierte Rippe 22 mit einer Druckseite 28 und einer Saugseite 30 und eine Senke 24, aus der sich die Rippe 22 erstreckt.

Die druckseitige Erhebung 20 erstreckt sich entlang einer druckseitigen Schaufelblattwandung 8 des Schaufelblattes 2 von einer Vorderkante 12a des Schaufelblattes 2 zu dessen Hinterkante 14a.

Im Unterschied zum vorhergehenden Ausführungsbeispiel nach Figur 1 ist die mittige schaufelprofilartige Rippe 22 in einem Bereich von etwa 0% bis 60% einer axialen Schaufelblattbreite angeordnet, so dass sie sich in etwa von einer axialen Position der Vorderkanten 12a, 12b der Schaufelblätter 2, 4 erstreckt.

Im weiteren Unterschied erstreckt sich die Senke 24 über die gesamte Seitenwandung 16 in Axialrichtung des Schaufelgitters 1 von einem vorderen Seitenwandrand 46 der Seitwandung 16 bis zum hinteren Seitenwandrand 36. Zudem ist die Senke 24 in Umfangsrichtung nicht nur von der druckseitigen Erhebung 20, sondern auch von einer saugseitigen Schaufelblattwandung 10 des Schaufelblattes 4 beabstandet.

Ein tiefster Abschnitt 38 der Senke 24 ist zudem nach vorne versetzt und beginnt nun entsprechend der Rippe 22 im Bereich der Vorderkanten 12a, 12b. Allerdings ist der tiefste Abschnitt 38 in etwa bis zur axialen Position der Hinterkanten 14a, 14b geführt und endet somit an der gleichen axialen Position wie der tiefste Abschnitt 38 des Ausführungsbeispiels nach Figur 1.

In Figur 5 ist ein weiteres Ausführungsbeispiel einer in Umfangsrichtung welligen Seitenwandkonturierung einer inneren Seitenwandung 16 in einem zwischen zwei Schaufelblättern 2, 4 gebildeten Schaufelkanal 6 gezeigt, die eine druckseitige Erhebung 20, zwei schaufelprofilartige Rippen 22, 48 und eine Senke 24 aufweist.

Die druckseitige Erhebung 20 erstreckt sich ausgehend vom nicht-konturierten Flächenabschnitt 34 entlang einer druckseitigen Schaufelblattwandung 8 des Schaufelblattes 2 von einer Vorderkante 12a des Schaufelblattes 2 zu dessen Hinterkante 14a.

Die schaufelprofilartigen Rippen 22, 48 erstrecken sich jeweils aus der Senke über die Erhebung 20 hinaus. Sie haben jeweils eine Druckseite 28, 50 und eine Saugseite 30, 52. Die Druckseiten 28, 50 haben dabei jeweils einen beispielsweise konkaven Übergangsbereich 54, 56, der sich aus der Senke 24 bis zur radialen Höhe der Erhebung 20 erstreckt. Die Übergangsbereiche 54, 56 können jedoch auch andersartig ausgebildet sein. Bevorzugterweise erstrecken sie sich stufenlos bzw. glatt vom Senkengrund. Die Rippen 22, 48 befinden sich in einem Bereich von etwa 60% bis 100% einer axialen Schaufelbreite, so dass sie sich bis zur axialen Position der Hinterkanten 14a, 14b der Schaufelblätter 2, 4 erstrecken. Ihre Breiten in Umfangsrichtung sind in etwa gleich. Sie sind derart zueinander orientiert, dass die Druckseite 28 der Rippe 22 der Saugseite 52 der Rippe 48 gegenüberliegt. Dabei sind sie derart zwischen den Schaufelblättern 2, 4 positioniert, dass zwischen ihnen und zur jeweils benachbarten Schaufelblattwandung 8, 10 ein gleicher Umfangsabstand vorliegt.

Die Senke 24 erstreckt sich in Umfangsrichtung von der Erhebung 20 zur saugseitigen Schaufelblattwandung 10 und in Axialrichtung stromabwärts von einer axialen Position der Vorderkanten 12a, 12b bis zum hinteren Seitenwandrand 36 der Seitenwandung 16. Die Senke 24 hat im vorderen Bereich zwei einzelne Senkenabschnitte, die durch den nicht-konturierten Flächenabschnitt 34 der Seitenwandung 16 gebildet bzw. voneinander getrennt werden.

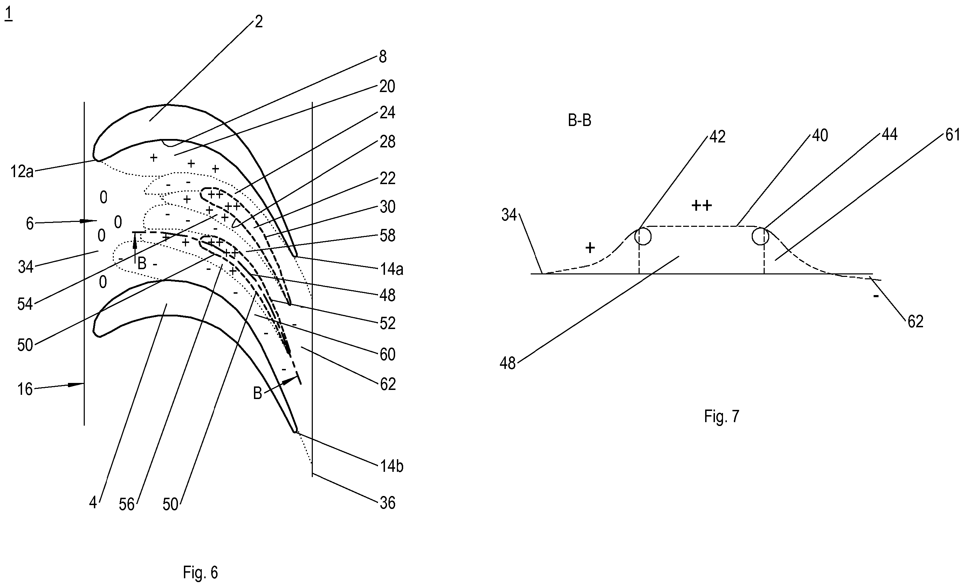

In Figur 6 ist eine in Umfangsrichtung wellenartige Seitenwandkonturierung einer inneren Seitenwandung 16 in einem Schaufelkanal 6 zwischen zwei Schaufelblättern 2, 4 eines Schaufelgitters 1 einer Strömungsmaschine mit einer druckseitigen Erhebung 20, zwei Rippen 22, 48 und mit drei Senken 24, 58, 60 gezeigt.

Die druckseitige Erhebung 20 erstreckt sich ausgehend vom nicht-konturierten Flächenabschnitt 34 entlang einer druckseitigen Schaufelblattwandung 8 des Schaufelblattes 2 von einer Vorderkante 12a des Schaufelblattes 2 bis zu dessen Hinterkante 14a.

Die schaufelprofilartigen Rippen 22, 48 haben jeweils eine Druckseite 28, 50 und eine Saugseite 30, 52. Sie befinden sich in einem Bereich von etwa 60% bis 100% einer axialen Schaufelbreite, so dass sie sich bis zur axialen Position der Hinterkanten 14a, 14b der Schaufelblätter 2, 4 erstrecken. Ihre Breiten in Umfangsrichtung sind in etwa gleich. Sie sind derart zwischen den Schaufelblättern 2, 4 positioniert, dass zwischen ihnen und zum jeweils benachbarten Schaufelblatt 2, 4 ein gleicher Umfangsabstand vorliegt. Im Bereich ihrer Druckseiten 28, 50 ist jeweils ein Übergangsbereich 54, 56 gebildet, der sich glatt vom nicht-konturierten Flächenabschnitt 34 bis zur radialen Höhe der Erhebung 20 erstreckt und in Strömungsrichtung betrachtet vor den Rippen 22, 48 beginnt. Die Übergangsbereiche 54, 56 erstrecken sich in etwa bis zu einem Bereich von etwa 30% bis 40% der axialen Schaufelbreite. Saugseitig fallen die Rippen 22, 48 steil in die Senken 28, 58 ab.

Wie in Figur 7 anhand des Schnittes B-B gezeigt, sind die Übergangsbereiche 54, 56 konkav ausgebildet. Sie erstrecken sich stufenlos bzw. glatt vom nicht-konturierten Flächenabschnitt 34 und gehen über eine durch einen Kreis angedeutete abgerundete Kante 42 in eine Rippendecke 40 über. Die in diesem Ausführungsbeispiel plane Rippendecken 40 sind dabei derart orientiert dass die Rippen 22, 48 in Strömungsrichtung eine konstante radiale Höhe haben.

Wie durch das Bezugszeichen 61 angedeutet, können die Rippen 22, 48 stromabwärts ebenfalls über einen konkaven Übergangsbereich unter den nicht-konturierten Flächenabschnitt 34 und somit in die Senke 24 abfallen. Wie durch einen Kreis angedeutet, gehen die Rippen 22, 48 dabei mit ihrer jeweiligen Rippendecke 40 ebenfalls über eine abgerundete Kante 44 in den Übergangsbereich 61 über. In Strömungsrichtung betrachtet variiert somit die jeweilige der Amplitude der Rippen 22, 28; und zwar steigen die Amplituden in dem gezeigten Ausführungsbeispiel flach an, verlaufen konstant weiter und fallen sanft ab.

Wie in Figur 6 gezeigt, ist die erste Senke 24 zwischen der druckseitigen Erhebung 20 und der Rippe 22 ausgebildet und grenzt an diese an. Die zweite Senke 58 ist zwischen den Rippen 22, 48 angeordnet und grenzt an diese an. Die dritte Senke 60 ist zwischen der Rippe 48 und dem Schaufelblatt 4 angeordnet und grenzt an diese an. Die drei Senken 24, 58, 60 erstrecken sich von einem axialen Seitenwandungsbereich, der etwa 20% bis 40% der axialen Schaufelbreite entspricht stromabwärts. Im Bereich des Schaufelkanals 6 sind sie durch die Rippen 22, 48 bzw. deren vorderen konkaven Abschnitte voneinander getrennt. Stromabwärts des Schaufelkanals 6 gehen die Senken 24, 58, 60 in den gemeinsamen Senkenabschnitt 62 bzw. bilden eine gemeinsame Senke 62, die sich von einer axialen Position der Hinterkanten 14a, 14b zum hinteren Seitenwandrand 36 der Seitenwandung 16 erstreckt.

In sämtlichen Ausführungsbeispielen können die zumindest eine Erhebung 20, 20' die zumindest eine Senke 24, 24', 58, 60, 62 und die zumindest eine Rippe 22, 22', 48 unterschiedliche oder gleiche Amplituden in Umfangsrichtung und in Strömungsrichtung haben. Die Amplituden der zumindest einen Erhebung 20, der zumindest einen Senken 24, 24', 58, 60, 62 und der zumindest einen Rippe 22, 22', 48 betragen bevorzugterweise maximal 30% einer Schaufelteilung.

Ebenso kann die Breite der zumindest einen Erhebung 20, 20' der zumindest einen Senken 24, 24', 58, 60, 62 und der zumindest eine Rippe 22, 22', 48 in Umfangsrichtung und in Längsrichtung jeweils variieren.

Zudem können die Krümmungsradien der Welligkeit der Seitenwandkonturierung bzw. Seitenwandkonturierungen in Umfangsrichtung variieren. So kann beispielsweise eine Erhebung 20, 20' einen deutlich kleineren Krümmungsradius als eine benachbarte Senke 24, 24', 58, 60, 62 aufweisen.

Offenbart ist ein Schaufelgitter einer Strömungsmaschine, dessen zumindest eine Seitenwandung in Umfangsrichtung wellenartig ausgebildet ist und zumindest eine Erhebung und zumindest eine Senke aufweist, wobei zumindest eine profilartige Rippe in die Seitenwandung integriert bzw. mit dieser kombiniert ist, die ein Schaufelblattprofil mit einer Druckseite und mit einer entgegengesetzten Saugseite hat, sowie eine Strömungsmaschine mit einem derartigen Schaufelgitter.

### Bezugszeichenliste

- 1: Schaufelgitter
- 2: Schaufelblatt
- 4: Schaufelblatt
- 6: Schaufelkanal
- 8: druckseitige Schaufelblattwandung
- 10: saugseite Schaufelblattwandung
- 12a, b: Vorderkante
- 14a, b: Hinterkante
- 16: innere Seitenwandung
- 18: äußere Seitenwandung
- 20, 20': druckseitige Erhebung
- 22, 22': Rippe
- 24, 24': Senke
- 26: Linie
- 28: Druckseite
- 30: Saugseite
- 32: Engstelle
- 34: nicht-konturierter Flächenabschnitt
- 36: hinterer Seitenwandrand
- 38: tiefster Abschnitt
- 40: Rippendecke
- 42: Kante
- 44: Kante
- 46: vorderer Seitenwandrand
- 48: Rippe
- 50: Druckseite
- 52: Saugseite
- 54: Übergangsbereich
- 56: Übergangsbereich
- 58: Senke
- 60: Senke
- 61: Übergangsbereich
- 62: Senkenabschnitt /gemeinsame Senke

## Patentansprüche

1. Schaufelgitter (1) einer Strömungsmaschine, mit einer Vielzahl von Schaufelkanälen (6), die in Umfangsrichtung jeweils von einer Druckseite (8) eines ersten Schaufelblattes (2) und von einer gegenüberliegenden Saugseite (10) eines benachbarten zweiten Schaufelblattes (4) begrenzt sind, und die in Radialrichtung jeweils von zwei gegenüberliegenden Seitenwandungen (16, 18) begrenzt sind, wobei zumindest jeweils eine Seitenwandung (16) der Schaufelkanäle (6) mit einer Seitenwandkonturierung versehen ist, welche in Umfangsrichtung wellenartig ist und eine Erhebung (20, 20') und zumindest eine Senke (24, 24', 58, 60, 62) aufweist, **dadurch gekennzeichnet, dass** die Seitenwandkonturierung ferner zumindest eine profilartige Rippe (22, 22', 48) aufweist, die ein Schaufelblattprofil mit einer Druckseite (28, 50) und mit einer entgegengesetzten Saugseite (30, 52) hat, wobei die Erhebung (20, 20') eine druckseitige Erhebung (20, 20') ist, welche sich entlang der Druckseite (8) des ersten Schaufelblattes (2) von einer Vorderkante (12a) des ersten Schaufelblattes (2) bis zu einer Hinterkante (14a) des ersten Schaufelblattes (2) erstreckt.

2. Schaufelgitter nach Anspruch 1, wobei die Seitenwandkonturierung bis zum stromabwärtigen Seitenwandrand (30) geführt ist.

3. Schaufelgitter nach Anspruch 1 oder 2, wobei die zumindest eine Erhebung (20, 20') und/oder die zumindest eine Senke (24, 24', 58, 60, 62) in Strömungsrichtung variierende Amplitude hat bzw. haben.

4. Schaufelgitter nach Anspruch 1, 2 oder 3, wobei die Druckseite (28, 50) und die Saugseite (30, 52) radial ausgerichtet sind.

5. Schaufelgitter nach Anspruch 4, wobei die Rippe (22, 22', 48) eine Höhe von maximal 30% einer Schaufelteilung hat.

6. Schaufelgitter nach einem der vorhergehenden Ansprüche, wobei sich die zumindest eine Rippe (22, 22', 48) in einem Bereich zwischen 40% bis 100% axialer Schaufelbreite befindet.

7. Schaufelgitter nach einem der Ansprüche 1 bis 5, wobei sich die zumindest eine Rippe (22, 22', 48) in einem Bereich zwischen 0% bis 60% axialer Schaufelbreite befindet.

8. Schaufelgitter nach einem der vorhergehenden Ansprüche, wobei die Seitenwandkonturierung abgerundete Kanten hat.

9. Schaufelgitter nach einem der vorhergehenden Ansprüche, wobei die zumindest eine Rippe (22, 22', 48) in Strömungsrichtung vorne und hinten stufenlos in angrenzende Flächenabschnitte übergeht.

10. Schaufelgitter nach einem der vorhergehenden Ansprüche, wobei Krümmungsradien der Seitenwandkonturierung variieren.

11. Strömungsmaschine mit zumindest einem Schaufelgitter (1) nach einem der vorhergehenden Ansprüche.

## Claims

1. Blade cascade (1) of a turbomachine, comprising a plurality of blade channels (6) which are delimited in the circumferential direction in each case by a pressure side (8) of a first airfoil (2) and by an opposite suction side (10) of an adjacent second airfoil (4) and which are delimited in the radial direction in each case by two opposite side walls (16, 18), at least one side wall (16) of each of the blade channels (6) being provided with side wall contouring which is formed in the manner of a wave in the circumferential direction and has a projection (20, 20') and at least one depression (24, 24', 58, 60, 62), **characterized in that** the side wall contouring also has at least one profile-like rib (22, 22', 48) which has an airfoil profile having a pressure side (28, 50) and an opposite suction side (30, 52), the projection (20, 20') being a pressure-side projection (20, 20') which extends along the pressure side (8) of the first airfoil (2) from a leading edge (12a) of the first airfoil (2) to a trailing edge (14a) of the first airfoil (2).

2. Blade cascade according to claim 1, wherein the side wall contouring is guided as far as the downstream side wall edge (30).

3. Blade cascade according to either claim 1 or claim 2, wherein the at least one projection (20, 20') and/or the at least one depression (24, 24', 58, 60, 62) has or have varying amplitude in the flow direction.

4. Blade cascade according to either claim 1, claim 2 or claim 3, wherein the pressure side (28, 50) and the suction side (30, 52) are radially aligned.

5. Blade cascade according to claim 4, wherein the rib (22, 22', 48) has a height of at most 30% of a blade pitch.

6. Blade cascade according to any of the preceding claims, wherein the at least one rib (22, 22', 48) is in a range between 40% and 100% of the axial blade width.

7. Blade cascade according to any of claims 1 to 5, wherein the at least one rib (22, 22', 48) is in a range between 0% and 60% of the axial blade width.

8. Blade cascade according to any of the preceding claims, wherein the side wall contouring has rounded edges.

9. Blade cascade according to any of the preceding claims, wherein the at least one rib (22, 22', 48) transitions steplessly at the front and back in the flow direction into adjoining surface portions.

10. Blade cascade according to any of the preceding claims, wherein radii of curvature of the side wall contouring vary.

11. Turbomachine comprising at least one blade cascade (1) according to any of the preceding claims.

## Revendications

1. Aubage statorique (1) de turbomachine, comportant une pluralité de canaux d'aubes (6) délimités chacun dans la direction périphérique par un côté pression (8) d'une première aube (2) et par un côté aspiration (10) opposé d'une seconde aube (4) adjacente, et délimités chacun dans la direction radiale par deux parois latérales opposées (16, 18), au moins une paroi latérale (16) des canaux d'aubes (6) étant pourvue chacune d'un contour de paroi latérale qui est ondulé dans la direction périphérique et présente une élévation (20, 20') et au moins une dépression (24, 24', 58, 60, 62), **caractérisé en ce que** le contour de paroi latérale comprend en outre au moins une nervure profilée (22, 22', 48) qui présente un profil de lame d'aube ayant un côté pression (28, 50) et un côté aspiration opposé (30, 52), ladite élévation (20, 20') étant une élévation côté pression (20, 20') s'étendant le long dudit côté pression (8) de ladite première aube (2) depuis un bord d'attaque (12a) de ladite première aube (2) vers un bord
arrière (14a) de ladite première aube (2).

2. Aubage statorique selon la revendication 1, dans laquelle le contour de paroi latérale est guidé jusqu'au bord de paroi latérale aval (30).

3. Aubage statorique selon la revendication 1 ou 2, dans laquelle l'au moins une élévation (20, 20') et/ou l'au moins une dépression (24, 24', 58, 60, 62) a ou ont une amplitude variant dans la direction d'écoulement.

4. Aubage statorique selon la revendication 1, 2 ou 3, dans lequel le côté pression (28, 50) et le côté aspiration (30, 52) sont alignés radialement.

5. Aubage statorique selon la revendication 4, dans lequel la nervure (22, 22', 48) a une hauteur d'au plus 30 % d'un pas d'aubage.

6. Aubage statorique selon l'une des revendications précédentes, dans lequel l'au moins une nervure (22, 22', 48) se situe dans une plage allant de 40 à 100 % de la largeur axiale d'aube.

7. Aubage statorique selon l'une des revendications 1 à 5, dans lequel l'au moins une nervure (22, 22', 48) se situe dans une plage allant de 0 à 60 % de la largeur axiale d'aube.

8. Aubage statorique selon l'une des revendications précédentes, dans lequel le contour de paroi latérale présente des bords arrondis.

9. Aubage statorique selon l'une des revendications précédentes, dans lequel l'au moins une nervure (22, 22', 48) se prolonge, dans la direction d'écoulement avant et arrière, en continu dans les parties de surface adjacentes.

10. Aubage statorique selon l'une des revendications précédentes, dans lequel les rayons de courbure du contour de paroi latérale varient.

11. Turbomachine comportant au moins un aubage statorique (1) selon l'une des revendications précédentes.
